# FASCICULE DE BREVET EUROPEEN

(11) **EP 3 350 006 B1**
(45) Date de publication et mention de la délivrance du brevet: **22.07.2020**
(21) Numéro de dépôt: 16766558.7
(22) Date de dépôt: 16.09.2016
(51) Int. Cl.: B60K 11/08, B62D 35/00, B60R 19/48

(54) **ENSEMBLE AVANT OU ARRIÈRE DE VÉHICULE AUTOMOBILE PRÉSENTANT UNE OUVERTURE ET COMPRENANT UN VOLET FLEXIBLE POUR OBTURER LADITE OUVERTURE**
VORDER- ODER HINTERBAUGRUPPE EINES KRAFTFAHRZEUGS MIT EINER ÖFFNUNG UND MIT EINEM FLEXIBLEN VERSCHLUSS ZUM VERSCHLIESSEN DER ÖFFNUNG
FRONT OR REAR ASSEMBLY OF A MOTOR VEHICLE HAVING AN OPENING AND INCLUDING A FLEXIBLE SHUTTER FOR SEALING SAID OPENING

(30) Priorité: 17.09.2015 FR 1558748
(43) Date de publication de la demande: 25.07.2018
(73) Titulaire: Flex-N-Gate France, 25405 Audincourt (FR); Plastic Omnium Automotive Exteriors GmbH, 80807 München (DE)
(72) Inventeur: LAURENT, Claude, 25420 Voujeaucourt (FR); BOIS, Frédéric, 67100 Strasbourg (FR); GROS, Virgille, 95150 Taverny (FR)
(74) Mandataire: Lavoix
(86) Numéro de dépôt international: PCT/EP2016/072055
(87) Numéro de publication internationale: WO 2017/046382

(56) Documents cités:
- DE-A1-102008 013 336
- GB-A- 2 509 933
- US-A1- 2007 199 751

## Description

La présente invention concerne un ensemble avant ou arrière de véhicule automobile, du type comprenant une peau de pare-chocs définissant une face externe visible de l'extérieur de l'ensemble avant ou arrière et présentant au moins une ouverture ménagée dans ladite face externe, l'ensemble avant ou arrière comprenant également un obturateur pour sélectivement obturer et libérer ladite ouverture, au moins partiellement.

Les véhicules automobiles haut de gamme modernes sont le plus souvent dotés d'entrées d'air à ouverture ajustable. Ces entrées d'air, disposées à l'avant ou à l'arrière du véhicule, permettent d'ajuster l'aérodynamique du véhicule à sa vitesse de déplacement, et ainsi d'améliorer sa consommation.

Les documents GB 2509933 A, DE 10 2008 013 336 A1 et US 2007/0199751 A1 décrivent des véhicules présentant une entrée d'air et un obturateur comprenant un volet pour sélectivement obturer et libérer ladite ouverture, au moins partiellement.

Dans certains véhicules, ces entrées d'air sont ménagées dans la peau de pare-chocs du véhicule. C'est le cas notamment du véhicule décrit dans FR 2 866 603, qui décrit un ensemble selon le préambule de la revendication 1. Dans d'autres véhicules, ces entrées d'air sont disposées en arrière de la calandre.

Un inconvénient des véhicules existants est qu'ils sont alourdis par les mécanismes de réglage de l'ouverture de ces entrées d'air, ce qui impacte négativement leur consommation et vient contrebalancer l'avantage apporté par la présence des entrées d'air. Un inconvénient supplémentaire est que l'esthétique des véhicules est impactée négativement par la présence de ces entrées d'air, que l'on ne parvient pas à dissimuler.

Un objectif de l'invention est de permettre de régler l'ouverture d'orifices ménagés dans la face avant ou arrière d'un véhicule automobile en limitant l'alourdissement dudit véhicule engendré par cette possibilité de réglage. Un autre objectif est de permettre de dissimuler aisément des ouvertures ménagées dans la face avant ou arrière d'un véhicule automobile.

A cet effet, l'invention a pour objet un ensemble avant ou arrière du type précité et selon la revendication 1.

Selon des modes de réalisation particuliers de l'invention, l'ensemble avant ou arrière comprend également l'une ou plusieurs des caractéristiques des revendications 1 à 11.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de face d'un ensemble arrière selon un premier exemple de réalisation de l'invention, une ouverture d'entrée d'air ménagée dans ledit ensemble arrière étant obturée,
- la Figure 2 est une vue similaire à la Figure 1, l'ouverture d'entrée d'air étant libérée,
- la Figure 3 est une vue en coupe, de dessus, de l'ensemble arrière de la Figure 2, selon une première variante,
- la Figure 4 est une vue en coupe, de dessus, de l'ensemble arrière de la Figure 2, selon une deuxième variante,
- la Figure 5 est une vue en coupe, de dessus, de l'ensemble arrière de la Figure 2, selon une troisième variante,
- la Figure 6 est une vue de face d'un ensemble arrière selon un deuxième exemple de réalisation de l'invention, une ouverture d'entrée d'air ménagée dans ledit ensemble arrière étant obturée, et
- la Figure 7 est une vue similaire à la Figure 1, l'ouverture d'entrée d'air étant libérée.

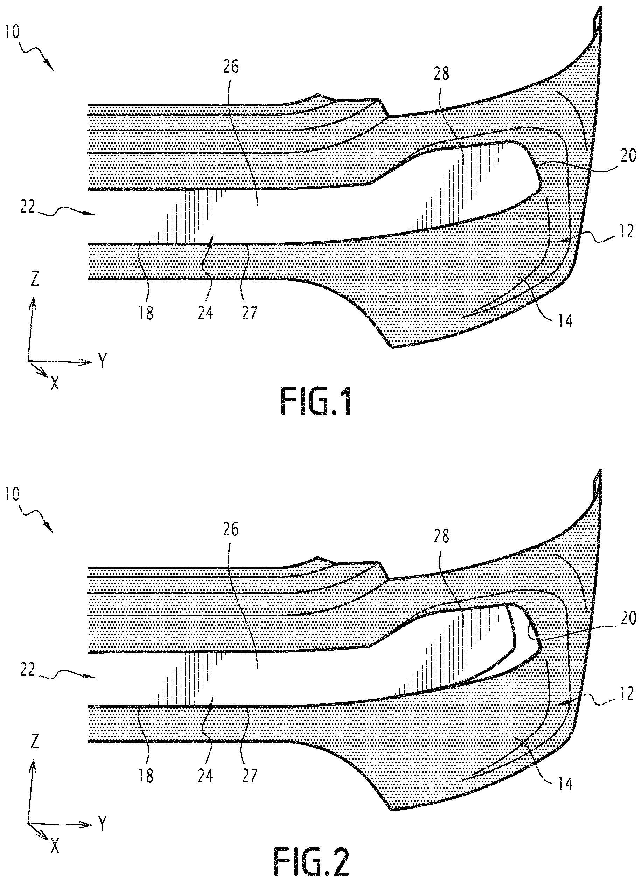

L'ensemble avant 10 de véhicule automobile, représenté sur la Figure 1, comprend une peau de pare-chocs 12. Cette peau de pare-chocs 12 est, de manière connue, réalisée en un matériau flexible tel qu'un polymère thermoplastique, par exemple du polypropylène, et est destinée à être montée sur un véhicule automobile de manière couvrir une poutre de pare-chocs (non représentée) de ce véhicule automobile, afin de dissimuler cette dernière.

Dans la suite, les termes d'orientation utilisés seront à entendre en référence à l'orientation de l'ensemble avant 10 lorsqu'il est monté sur un véhicule automobile, les termes d'orientation utilisés étant ceux du repère orthogonal usuel des véhicules automobiles, dans lequel on distingue :
- une direction longitudinale X, orientée de l'arrière vers l'avant du véhicule,
- une direction transversale Y, orientée de la droite vers la gauche, et définissant avec la direction longitudinale un plan horizontal, et
- une direction verticale Z, perpendiculaire au plan horizontal, orientée du bas vers le haut.

La section horizontale de la peau de pare-chocs 12 a une forme générale convexe avec une convexité orientée vers l'extérieur de l'ensemble avant 10.

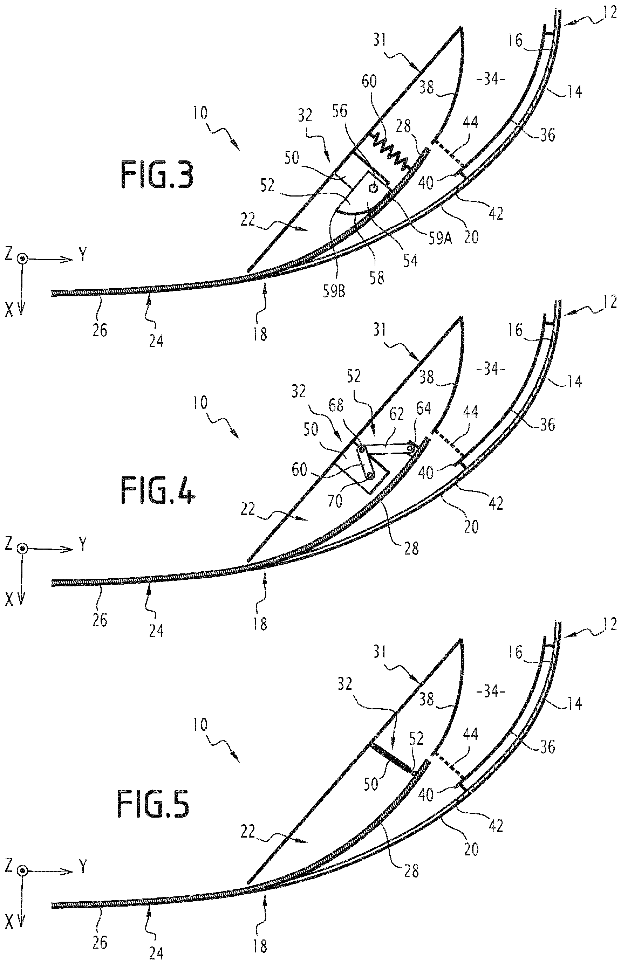

La peau de pare-chocs 12 présente une face externe 14, visible depuis l'extérieur de l'ensemble avant 10, et une face interne 16 (Figure 3), opposée à la face externe 14.

La peau de pare-chocs 12 présente également au moins une ouverture traversante 18 débouchant dans les faces interne 16 et externe 14. Cette ouverture traversante 18 présente une forme générale allongée s'étendant suivant la direction transversale Y. Elle définit des ouvertures d'entrée d'air 20 qui, dans l'exemple représenté, sont formées par des évasements de l'ouverture traversante 18 à ses extrémités transversales.

L'ensemble avant 10 comprend également un obturateur 22 pour sélectivement obturer et libérer chacune des ouvertures d'entrée d'air 20.

Selon le premier exemple de réalisation, cet obturateur 22 comprend un volet flexible 24 rapporté sur la peau de pare-chocs 12 et disposé en regard de l'ouverture traversante 18.

Le volet flexible 24 est monobloc. Il est typiquement réalisé dans le même matériau que la peau de pare-chocs 12.

Le volet flexible 24 est allongé suivant une direction d'élongation transversale. Le volet flexible 24 s'étend ainsi sensiblement parallèlement à la direction d'élongation de l'ouverture 18. Le volet flexible 24 s'étend en particulier d'une extrémité transversale de l'ouverture 18 à l'extrémité transversale opposée, et a une hauteur au moins égale à la hauteur de l'ouverture 18.

Le volet flexible 24 comprend une portion centrale 26 fixe relativement à la peau de pare-chocs 12 et des parties d'extrémité 28 mobiles relativement à la peau de pare-chocs 12. Ces parties d'extrémité 28 sont chacune disposées à une extrémité du volet flexible 24 suivant sa direction d'élongation.

La portion centrale 26 est disposée en regard d'une région centrale 27 de l'ouverture 18 intercalée entre les ouvertures d'entrée d'air 20. Elle affleure la peau de pare-chocs 12 et ferme intégralement la région centrale 27.

Chaque partie d'extrémité 28 est disposée en regard d'une ouverture d'entrée d'air 20 respective, et est déplaçable relativement à la peau de pare-chocs 12 entre une position d'obturation de ladite ouverture d'entrée d'air 20 par le volet flexible 24, représentée sur la Figure 1, dans laquelle la partie d'extrémité 28 s'étend en travers de l'entrée d'air 20, et une position de libération de l'ouverture d'entrée d'air 20, représentée sur la Figure 2, dans laquelle la partie d'extrémité 28 est à l'écart de l'ouverture d'entrée d'air 20. En particulier, dans la position d'obturation de l'ouverture d'entrée d'air 20, la partie d'extrémité 28 affleure la peau de pare-chocs 12 et, dans la position de libération de l'ouverture d'entrée d'air 20, la partie d'extrémité 28 est en retrait vers l'intérieur de l'ensemble avant 10 relativement à la peau de pare-chocs 12.

Dans une variante non représentée de ce premier exemple de réalisation, la peau de pare-chocs 12 présente une pluralité d'ouvertures traversantes 18, chacune définissant une ouverture d'entrée d'air 20 respective. L'obturateur 22 comprend alors autant de volets flexibles 24 que la peau de pare-chocs 12 présente d'ouvertures traversantes 18, et chaque volet flexible 24 est fixé à la peau de pare-chocs 12 par une de ses extrémités, l'extrémité opposée du volet flexible 24 formant alors une portion mobile déplaçable de manière similaire aux parties d'extrémité 28 décrites ci-dessus.

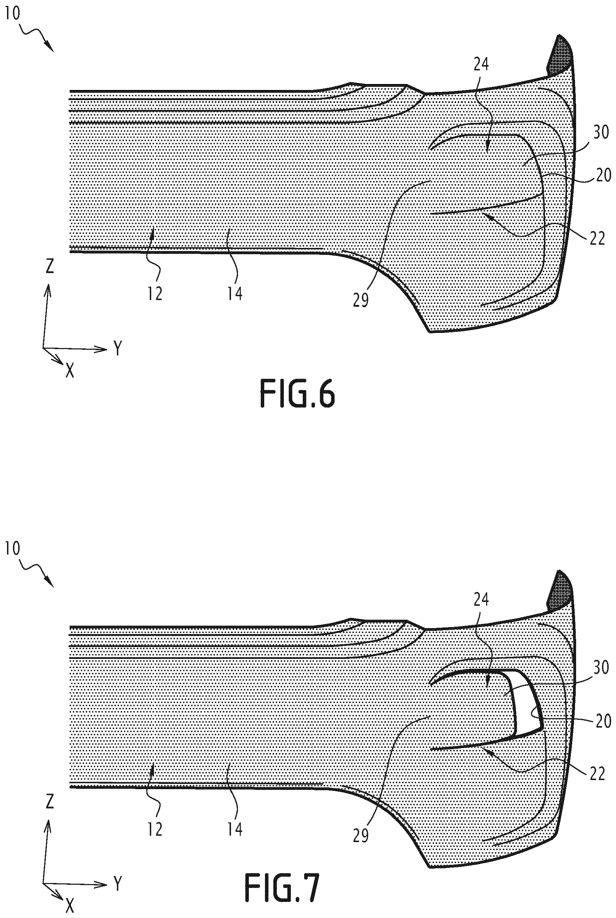

Le deuxième exemple de réalisation représenté sur les Figures 6 et 7 se distingue du premier exemple de réalisation décrit plus haut en ce que les volets flexibles 24, qui sont en nombre égal au nombre d'ouvertures d'entrée d'air 20, sont venus de matière avec la peau de pare-chocs 12 et non pas rapportés sur la peau de pare-chocs 12.

Chaque volet flexible 24 est alors constitué par une partie de la peau de pare-chocs 12 découpée pour former l'une des ouvertures d'entrée d'air 20, ladite partie ayant été découpée sur une partie seulement de sa périphérie de manière à conserver un pont de matière reliant le volet flexible 24 au reste de la peau 12, ledit pont de matière formant une charnière 29 entre le volet 24 et la peau de pare-chocs 12. La charnière 29 est, dans l'exemple représenté, disposée à une extrémité latérale du volet 24.

La charnière 29 forme alors une portion fixe du volet flexible 24 relativement à la peau de pare-chocs 12. L'extrémité 30 du volet flexible 24 opposée à la charnière 29 forme quant à elle une portion mobile relativement à la peau de pare-chocs 12, du fait de la flexibilité du volet 24. Le volet 24 est, dans l'exemple représenté, allongé suivant une direction d'élongation allant de la charnière 29 jusqu'à l'extrémité 30 ; ainsi, la flexibilité du volet 24 est accrue.

L'extrémité 30 forme alors une portion mobile déplaçable de manière similaire aux parties d'extrémité 28 décrites ci-dessus.

De manière commune aux premier et deuxième exemples de réalisation, l'ensemble avant 10 comprend également, en référence aux Figures 3 à 5, un élément de support 31, et l'obturateur 22 comprend, pour chaque ouverture d'entrée d'air 20, un actionneur 32 monté entre ledit élément de support 31 et le volet flexible 24.

L'élément de support 31 est disposé à l'intérieur de l'ensemble avant 10 par rapport à la peau de pare-chocs 12. Il est fixe par rapport à la peau de pare-chocs 12 ; à cet effet, l'élément de support 31 est typiquement fixé à la peau de pare-chocs 12, par exemple par collage, enclipsage, ou toute autre fixation que l'on trouve habituellement dans les pare-chocs de véhicule automobile.

L'élément de support 31 est réalisé dans un matériau relativement rigide, par exemple en polypropylène chargé.

L'élément de support 31 comporte un guide d'air 34 pour chaque entrée d'air 20. Ce guide d'air 34 disposé en retrait vers l'intérieur de l'ensemble avant 10 par rapport à ladite ouverture d'entrée d'air 20.

Le guide d'air 34 est délimité latéralement par deux parois verticales 36, 38. Une première desdites parois verticales 36 présente une extrémité longitudinale 40 affleurant un bord latéral 42 de l'ouverture d'entrée d'air 20. La deuxième paroi verticale 38 est agencée de manière à s'étendre dans le prolongement du volet flexible 24 lorsque la partie d'extrémité 28, 30 du volet flexible 24 est dans sa position de libération.

Le guide d'air 34 comprend également une grille 44 s'étendant entre les parois verticales 36, 38 en travers du guide d'air 34.

L'actionneur 32 est adapté pour commander le déplacement de la partie d'extrémité 28, 30 du volet flexible 24 entre ses positions d'obturation et de libération. A cet effet, l'actionneur 32 comprend un corps motorisé 50 fixé à l'élément de support 31 et un organe mobile 52 en contact avec la partie d'extrémité 28, 30 et entraîné par le corps motorisé 50. Le corps motorisé 50 est typiquement constitué par un moteur électrique.

Selon une première variante, représentée sur la Figure 3, l'organe mobile 52 est constitué par une came 54 montée mobile en rotation autour d'un axe de rotation 56 qui, dans l'exemple représenté, est sensiblement vertical. La came 54 présente une surface 58 d'appui contre la partie d'extrémité 28, 30 du volet flexible 24, ladite surface d'appui 58 ayant une distance à l'axe de rotation 56 augmentant continûment depuis une extrémité proximale 59A de la surface d'appui 58 jusqu'à une extrémité distale 59B de ladite surface d'appui 58.

L'obturateur 22 comprend alors également un organe 60 de rappel de la partie d'extrémité 28, 30 en appui contre la surface d'appui 58. Cet organe de rappel 60 est, dans l'exemple représenté, constitué par un ressort de traction accroché à l'élément de support 31 et à la partie d'extrémité 28, 30.

Ainsi, lorsque la came 54 est orientée de manière à ce que la partie d'extrémité 28, 30 du volet flexible 24 soit en appui contre l'extrémité proximale 59A de la surface d'appui 58, la partie d'extrémité 28, 30 est dans sa position de libération et, lorsque la came 54 est orientée de manière à ce que la partie d'extrémité 28, 30 du volet flexible 24 soit en appui contre l'extrémité distale 59B de la surface d'appui 58, la partie d'extrémité 28, 30 est dans sa position d'obturation.

Selon une deuxième variante, représentée sur la Figure 4, l'organe mobile 52 comprend une première biellette 62 articulée autour d'un premier axe 64 à la partie d'extrémité 28, 30 du volet flexible 24 et une deuxième biellette 66 articulée à la première biellette 62 autour d'un deuxième axe 68 sensiblement parallèle au premier axe 64. La deuxième biellette 66 est montée pivotante relativement au corps motorisé 50 autour d'un troisième axe 70 sensiblement parallèle aux premier et deuxième axes 64, 66, et le corps motorisé 50 est adapté pour entraîner la deuxième biellette 66 en rotation autour du troisième axe 70. Le premier, deuxième et troisième axes 64, 68, 70 sont, dans l'exemple représenté, des axes sensiblement verticaux.

Ainsi, lorsque la partie d'extrémité 28, 30 du volet flexible 24 est dans position de libération et que la deuxième biellette 66 est pivotée autour du troisième axe 70 de manière à déplacer le deuxième axe 68 en direction du premier axe 64, cela provoque le déplacement de la partie d'extrémité 28, 30 vers sa position d'obturation. Lorsqu'au contraire la partie d'extrémité 28, 30 du volet flexible 24 est dans position d'obturation et que la deuxième biellette 66 est pivotée autour du troisième axe 70 de manière à déplacer le deuxième axe 68 dans une direction opposée au premier axe 64, cela provoque le déplacement de la partie d'extrémité 28, 30 vers sa position de libération.

Selon une troisième variante, représentée sur la Figure 5, l'actionneur 32 est constitué par un vérin électrique. Le corps 50 est alors constitué par le corps du vérin, et l'organe mobile 52 est constitué par la tige du vérin, l'extrémité de ladite tige étant accrochée à la partie d'extrémité 28, 30 du volet flexible 24.

Ainsi, lorsque le vérin est rétracté, la partie d'extrémité 28, 30 est dans position de libération, et lorsque le vérin est déployé, la partie d'extrémité 28, 30 est dans position d'obturation.

Bien que les exemples de réalisation présentés ci-dessus aient été décrits dans le cas où la peau de pare-chocs 12 ne comprenait que deux entrées d'air, l'invention n'est pas restreinte à ce seul cas et la peau de pare-chocs 12 peut présenter un nombre quelconque d'entrées d'air.

Bien que la description de l'invention donnée ci-dessus se restreigne au cas où les ouvertures 20 sont des ouvertures d'entrée d'air, l'invention n'est pas limitée à ce seul mode de réalisation. Ainsi, dans une variante non représentée de l'invention, l'ensemble avant 10 comprend au moins une source lumineuse disposée en regard d'une ouverture 20, en retrait vers l'intérieur de l'ensemble avant 10 par rapport à la peau de pare-chocs 12 ; l'obturateur 22 permet alors de sélectivement cacher et découvrir ladite source lumineuse.

La description donnée ci-dessus est également applicable à un ensemble arrière de véhicule automobile, les directions avant et arrière d'une part et droite et gauche d'autre part devant simplement être inversées.

## Revendications

1. Ensemble avant ou arrière (10) de véhicule automobile, comprenant une peau de pare-chocs (12) définissant une face externe (14) visible de l'extérieur de l'ensemble avant ou arrière (10) et présentant au moins une ouverture (20) ménagée dans ladite face externe (14), l'ensemble avant ou arrière (10) comprenant également un obturateur (22) pour sélectivement obturer et libérer ladite ouverture (20), au moins partiellement,
**caractérisé en ce que** l'obturateur (22) comprend un volet flexible (24) comportant une portion fixe (26, 29) relativement à la peau de pare-chocs (12) et une portion mobile (28, 30) relativement à la peau de pare-chocs (12), la portion mobile (28, 30) étant déplaçable entre une position d'obturation de l'ouverture (20) par le volet flexible (24) et une position de libération de l'ouverture (20), et
**en ce que**, dans la position d'obturation de l'ouverture (20), la portion mobile (28, 30) affleure la peau de pare-chocs (12) et, dans la position de libération de l'ouverture (20), la portion mobile (28, 30) est en retrait vers l'intérieur de l'ensemble avant ou arrière (10) relativement à la peau de pare-chocs (12).

2. Ensemble avant ou arrière (10) selon la revendication 1, dans lequel le volet flexible (24) est venu de matière avec la peau de pare-chocs (12).

3. Ensemble avant ou arrière (10) selon la revendication 1, dans lequel le volet flexible (24) est rapporté sur la peau de pare-chocs (12).

4. Ensemble avant ou arrière (10) selon l'une quelconque des revendications précédentes, dans lequel la portion mobile (28, 30) est constituée par une partie d'extrémité du volet flexible (24).

5. Ensemble avant ou arrière (10) selon la revendication 4, dans lequel le volet flexible (24) est allongé suivant une direction d'élongation, et la partie d'extrémité est disposée à une extrémité du volet flexible (24) suivant ladite direction d'élongation.

6. Ensemble avant ou arrière (10) selon l'une quelconque des revendications précédentes, dans lequel l'obturateur (22) comprend un actionneur (32) pour commander le déplacement de la portion mobile (28, 30) entre ses positions d'obturation et de libération.

7. Ensemble avant ou arrière (10) selon la revendication 6, comprenant un élément de support (31) disposé à l'intérieur de l'ensemble avant ou arrière (10) par rapport à la peau de pare-chocs (12), l'élément de support (31) étant fixe relativement à la peau de pare-chocs (12), l'actionneur (32) étant monté entre ledit élément de support (31) et le volet flexible (24).

8. Ensemble avant ou arrière (10) selon la revendication 7, dans lequel l'élément de support (31) comporte un guide d'air (34) ayant une paroi (38) agencée de manière à s'étendre dans le prolongement du volet flexible (24) lorsque la portion mobile (28, 30) du volet flexible (24) est dans sa position de libération.

9. Ensemble avant ou arrière (10) selon l'une quelconque des revendications 6 à 8, dans lequel l'actionneur (32) comprend une came (54) montée mobile en rotation autour d'un axe de rotation (56) et un moteur électrique (50) pour entraîner la came (54) en rotation autour de l'axe de rotation (56), la came (54) présentant une surface (58) d'appui contre la portion mobile (28, 30) du volet flexible (24), ladite surface d'appui (58) ayant une distance variable à l'axe de rotation (56), et l'obturateur (22) comprend un organe (60) de rappel de la portion mobile (28, 30) en appui contre la surface d'appui (58) de la came (54).

10. Ensemble avant ou arrière (10) selon l'une quelconque des revendications 6 à 8, dans lequel l'actionneur (32) est constitué par un vérin électrique ayant une extrémité attachée à la portion mobile (28, 30) du volet flexible (24).

11. Ensemble avant ou arrière (10) selon l'une quelconque des revendications 6 à 8, dans lequel l'actionneur (32) comprend une première biellette (62) articulée autour d'un premier axe (64) à la portion mobile (28, 30) du volet flexible (24) et une deuxième biellette (66) articulée à la première biellette (62) autour d'un deuxième axe (68) sensiblement parallèle au premier axe (64), la deuxième biellette (66) étant montée pivotante relativement à la peau de pare-chocs (12) autour d'un troisième axe (70) sensiblement parallèle aux premier et deuxième axes (64, 68), l'actionneur (32) comprenant encore un moteur électrique (50) pour entraîner la deuxième biellette (66) en rotation autour du troisième axe (70).

## Patentansprüche

1. Vordere oder hintere Baugruppe (10) eines Fahrzeugs, die eine eine Außenfläche definierende Stoßfängerhaut (12) aufweist, die von außen in Bezug auf die vordere oder hintere Baugruppe (10) sichtbar ist und mindestens eine Öffnung (20) aufweist, die in der Außenfläche (14) eingearbeitet ist, wobei die vordere oder hintere Baugruppe (10) gleichfalls ein Verschlusselement (22) zum wahlweisen, zumindest teilweisen, Verschließen und Freilegen der Öffnung (20),
**dadurch gekennzeichnet, dass** das Verschlusselement (22) eine flexible Klappe (24) umfasst, die einen relativ zur Stoßfängerhaut (12) feststehenden Abschnitt (26, 29) und einen relativ zur Stoßfängerhaut (12) beweglichen Abschnitt (28, 30) aufweist, wobei der bewegliche Abschnitt (28, 38) zwischen einer Position des Verschließens der Öffnung (20) durch die flexible Klappe (24) und einer Position des Freilegens der Öffnung (20) bewegbar ist, und
dass in der Position des Verschließens der Öffnung (20) der bewegliche Abschnitt (28, 30) mit der Stoßfängerhaut (12) abschließt und in der Position des Freilegens der Öffnung (20) der bewegliche Abschnitt (28, 30) in das Innere der vorderen oder hinteren Baugruppe (10) relativ zur Stoßfängerhaut (12) zurückgezogen ist.

2. Vordere oder hintere Baugruppe (10) nach Anspruch 1, bei der die flexible Klappe (24) aus einem Material mit der Stoßfängerhaut (12) hergestellt ist.

3. Vordere oder hintere Baugruppe (10) nach Anspruch 1, bei der die flexible Klappe (24) an der Stoßfängerhaut (12) angesetzt ist.

4. Vordere oder hintere Baugruppe (10) nach einem beliebigen der vorhergehenden Ansprüche, bei der der flexible Abschnitt (28, 30) aus einem Endteil der flexiblen Klappe (24) besteht.

5. Vordere oder hintere Baugruppe (10) nach Anspruch 4, bei der die flexible Klappe (24) gemäß einer Richtung der Längserstreckung verlängert ist und das Endteil an einem Ende der flexiblen Klappe (24) gemäß der Richtung der Längserstreckung angeordnet ist.

6. Vordere oder hintere Baugruppe (10) nach einem beliebigen der vorhergehenden Ansprüche, bei der das Verschlusselement (20) eine Stellvorrichtung (32) zum Steuern der Bewegung des beweglichen Abschnitts (28, 30) zwischen seiner Verschlussposition und seiner Freilegungsposition umfasst.

7. Vordere oder hintere Baugruppe (10) nach Anspruch 6, die ein Stützelement (31) umfasst, das im Inneren der vorderen oder hinteren Baugruppe (10) in Bezug auf die Stoßfängerhaut (12) angeordnet ist, wobei das Stützelement (31) relativ zur Stoßfängerhaut (12) feststehend ist, wobei die Stellvorrichtung (32) zwischen dem Stützelement (31) und der flexiblen Klappe (24) montiert ist.

8. Vordere oder hintere Baugruppe (10) nach Anspruch 7, bei der das Stützelement (31) eine Luftführung (34) umfasst, die eine Wand (38) aufweist, die ausgebildet ist, sich in Verlängerung der flexiblen Klappe (24) zu erstrecken, wenn der bewegliche Abschnitt (28, 30) der flexiblen Klappe (24) in seiner Freilegungsposition ist.

9. Vordere oder hintere Baugruppe (10) nach einem beliebigen der Ansprüche 6 bis 8, bei der die Stellvorrichtung (32) einen Nocken (54), der drehbeweglich um eine Drehachse (56) montiert ist, und einen elektrischen Motor (50) zum Antreiben des Nockens zur Drehung um die Drehachse (56) umfasst, wobei der Nocken (54) eine Stützfläche (58) gegen den beweglichen Abschnitt (28, 30) der flexiblen Klappe (24) aufweist, wobei die Stützfläche (58) eine variable Entfernung zur Drehachse (56) aufweist, und das Verschlusselement (22) ein Rückstellelement (60) des beweglichen Teils (28, 30) in Abstützung gegen die Stützfläche (58) des Nockens (54) umfasst.

10. Vordere oder hintere Baugruppe (10) nach einem beliebigen der Ansprüche 6 bis 8, bei der die Stellvorrichtung (32) durch eine elektrische Kolben-Zylinderanordnung, an dem beweglichen Abschnitt (28, 30) der flexiblen Klappe (24) befestigt ist, gebildet ist.

11. Vordere oder hintere Baugruppe (10) nach einem beliebigen der Ansprüche 6 bis 8, bei der die Stellvorrichtung (32) eine erste Stange (62), die um eine erste Achse (64) an dem mobilen Abschnitt (28, 30) der flexiblen Klappe (24) angelenkt ist, und eine zweite Stange (66), die an der ersten Stange (62) um eine zweite Achse (68) im Wesentlichen parallel zu ersten Achse (64) angelenkt ist, umfasst, wobei die zweite Stange (64) relativ zu der Stoßfängerhaut (12) um eine dritte Achse (70) im Wesentlichen parallel zur ersten und zweiten Achse (64, 68) schwenkbar ist, wobei die Stellvorrichtung noch einen elektrischen Motor (50) zum Antreiben der zweiten Stange (66) zur Drehung um die dritte Achse (70) umfasst.

## Claims

1. A front or rear assembly (10) of a motor vehicle, comprising a bumper skin (12) defining an outer surface (14) that is visible from the outside of the front or rear assembly (10) and has at least one opening (20) in the outer surface (14), the front or rear assembly (10) also comprising a shutter (22) for selectively closing and releasing said opening (20), at least partially,
**characterized in that** the shutter (22) comprises a flexible flap (24) having a fixed portion (26, 29) relative to the bumper skin (12) and a movable portion (28, 30) relative to the bumper skin (12), the movable portion (28, 30) being movable between a shuttering position in which the opening (20) is shuttered by the flexible flap (24) and a releasing position in which the opening (20) is released, and
**in that**, in the shuttering position of the opening (20), the movable portion (28, 30) is flush with the bumper skin (12) and, in the releasing position of the opening (20), the movable portion (28, 30) is recessed towards the inside of the front or rear assembly (10) relative to the bumper skin (12).

2. The front or rear assembly (10) according to claim 1, wherein the flexible flap (24) is made together in one piece with the bumper skin (12).

3. The front or rear assembly (10) according to claim 1, wherein the flexible flap (24) is attached to the bumper skin (12).

4. The front or rear assembly (10) according to any one of the preceding claims, wherein the movable portion (28, 30) is constituted by an end portion of the flexible flap (24).

5. The front or rear assembly (10) according to claim 4, wherein the flexible flap (24) is elongated along an elongation direction, and the end portion is arranged at one end of the flexible flap (24) in said elongation direction.

6. The front or rear assembly (10) according to any one of the preceding claims, wherein the shutter (22) comprises an actuator (32) for controlling the displacement of the movable portion (28, 30) between its shuttering and releasing positions.

7. The front or rear assembly (10) according to claim 6, comprising a support element (31) arranged inside the front or rear assembly (10) with respect to the bumper skin (12), the support element (31) being fixed relative to the bumper skin (12), the actuator (32) being mounted between the support element (31) and the flexible flap (24).

8. The front or rear assembly (10) according to claim 7, wherein the support element (31) comprises an air guide (34) having a wall (38) arranged to extend in the extension of the flexible flap (24) when the movable portion (28, 30) of the flexible flap (24) is in its releasing position.

9. The front or rear assembly (10) according to any one of the claims 6 to 8, wherein the actuator (32) comprises a cam (54) mounted to rotate about an axis of rotation (56), and an electric motor (50) to rotate the cam (54) about the axis of rotation (56), the cam (54) having a surface (58) bearing against the movable portion (28, 30) of the flexible flap (24), said bearing surface (58) being at a variable distance from the axis of rotation (56), and the shutter (22) comprises a member (60) for biasing the movable portion (28, 30) to bear against the bearing surface (58) of the cam (54).

10. The front or rear assembly (10) according to any one of the claims 6 to 8, wherein the actuator (32) is constituted by an electric jack having an end attached to the movable portion (28, 30) of the flexible flap (24).

11. The front or rear assembly (10) according to any one of the claims 6 to 8, wherein the actuator (32) comprises a first connecting rod (62) hinged to the movable portion (28, 30) of the flexible flap (24) about a first axis (64), and a second connecting rod (66) hinged to the first connecting rod (62) about a second axis (68) that is substantially parallel to the first axis (64), the second connecting rod (66) being mounted to pivot relative to the bumper skin (12) about a third axis (70) that is substantially parallel to the first and second axes (64, 68), the actuator (32) further comprising an electric motor (50) to rotate the second connecting rod (66) about the third axis (70).
